# EUROPÄISCHE PATENTANMELDUNG

(11) **EP 4 322 562 A1**
(43) Veröffentlichungstag der Anmeldung: **14.02.2024**
(21) Anmeldenummer: 22189201.1
(22) Anmeldetag: 08.08.2022
(51) Int. Cl.: H04W 4/08, H04L 67/55

(54) **VERFAHREN ZUR ÜBERTRAGUNG VON DATEN INNERHALB EINES PUBLISH-SUBSCRIBE BASIERTEN KOMMUNIKATIONSNETZES**

(71) Anmelder: Siemens Aktiengesellschaft, 80333 München (DE)
(72) Erfinder: Hohl, Hubertus, 79219 Staufen (DE); Sauer, Markus, 81739 München (DE)
(74) Vertreter: Siemens Patent Attorneys

(57) **Zusammenfassung**

Die Erfindung beansprucht ein Verfahren zur Übertragung von Daten innerhalb eines Publish-Subscribe basierten Kommunikationsnetzes (CN) von mindestens einer Datenbereitstellungskomponente (AG2) zu mindestens einer Datenkonsumkomponente (AG1) des Kommunikationsnetzwerkes, wobei die genannten Datenkomponenten zumindest einen Teil eines mehrere Datenkomponenten umfassenden System bilden, wobei die Daten mindestens eine Nutzinformation (NI) einer bestehenden ein Abonnement begründenden Kommunikation zwischen den genannten Datenkomponenten und gegebenenfalls mindestens eine auf die Nutzinformation bezogene Metainformation umfassen, dadurch gekennzeichnet, dass in die Daten mindestens eine von der Nutzinformation unabhängige systemweite Metainformation (MI) eingebettet ist oder wird.

## Beschreibung

Die Erfindung betrifft ein Verfahren und ein System zur Übertragung von Daten innerhalb eines Publish-Subscribe basierten Kommunikationsnetzes sowie ein zugehöriges Verfahren und ein zugehöriges Computerprogrammprodukt.

Dezentral organisierte IoT-Systeme (Iot = Internet of Things), in denen bevorzugt (teil)autonome, lose gekoppelte Systemkomponenten bzw. -teilnehmer über ein datenzentrisches - bevorzugt ein Publish/Subscribe-Kommunikationsverfahren Nachrichten/Daten austauschen. Ein solcher Publikations- /Abonnementdienst (Public/Subscribe Service) wird beispielsweise über den Standard MQTT (MQ Telemetry Transport oder Message Queue Telemetry Transport, siehe http://mqtt.org/) oder DDS (Data Distribution Service; siehe https://www.dds-foundation.org/) bereitgestellt.

Beim Publish-Subscribe-Verfahren sendet der Publisher (Data Provider; Server) seine Nachricht und die darin enthaltenen Daten ins Netzwerk und an eine festgelegte Teilnehmergruppe. Der oder die Subscriber (Data Consumer; Client) können die Nachricht aus dem Netzwerk abgreifen, ohne eine dedizierte Verbindung zum Publisher aufzubauen. Im Folgenden werden Komponenten bzw. Geräte, die in einem Kommunikationsnetzwerk Daten nach dem Publish-Subscribe-Verfahren zur Verfügung stellen, als Publisher bzw. Datenbereitungstellungskomponente und entsprechend Geräte, die in einem Kommunikationsnetzwerk Daten nach dem Publish-Subscribe-Verfahren empfangen oder zumindest empfangen können, als Subscriber bzw. Datenkonsumkomponenten bezeichnet.

Speziell bei den Publishern kann es sich um IoT-Geräte (Internet of Things) handeln, also zum Beispiel Sensoren im Feld eines automatisierten technischen Prozesses oder dergleichen. Beispielsweise können drei Sensoren A, B, C auf einem Topic mit der Bezeichnung "temperature" kontinuierlich ihre Sensorwerte in Form von Temperaturwerten publizieren. Z.B. publiziert Sensor A auf "temperature/A", der Sensor B auf "temperature/B" und der Sensor C auf "temperature/C". Zwei Datenkonsumkomponenten E, F abonnieren das Topic "temperature". In diesem System würden die Datenkonsumkomponenten E, F alle Sensorwerte als Nutzinformation, die auf dem Topic publiziert werden, erhalten, ohne dabei die Sensoren A, B, C kennen zu müssen. Fällt ein Sensor, z.B. der Sensor A, aus, arbeitet das Netzwerk weiter, ohne dass Konfigurationsanpassungen vorgenommen werden müssen. Kommt ein weiterer Sensor D hinzu, gilt dasselbe ohne erforderliche Anpassungen der Konfiguration.

Ein weiteres typisches (technisches) System im industriellen Umfeld sind miteinander vernetzte autonome Agenten, insbesondere Roboter, die als Datenkomponenten im System kollaborativ zusammenarbeiten, um Arbeitsaufgaben ad hoc, dezentral und effizient durchführen zu können. Um Daten in einem solchen System auszutauschen, muss jeder einzelne Systemteilnehmer in der Empfängerrolle explizit Abonnements einrichten, um darauf Nutzdaten/-information zu empfangen, und in der Senderrolle Nutzdaten/-information auf eingerichtete Abonnements publizieren.

Es gibt Metainformationen in den Daten, die im Header (Kopfzeile) einer zu übertragenden Nachricht stehen, welche sich auf die zu übertragende Nutzinformation beziehen. Solche Nutzinformation bezogene Metainformation umfassen in der Regel Informationen zum Empfänger. Da im oben erläuterten Beispiel, der Empfänger nicht direkt über eine Empfängeradresse, sondern über den abonnierten Nachrichten-/Kommunikationskanal erreicht wird, stellt das oben genannte Topic eine solche Nutzinformation bezogene Metainformation dar. Metainformationen, die sich direkt und ausschließlich auf die übertragenen Nutzinformation(en) einer Nachricht beziehen, können z.B. die Angabe des Kodierungs- bzw. Kompressionsverfahrens der Nutzinformation(en) sein, damit diese auf der Empfängerseite wieder dekodiert werden können.

Es ist möglich, systemweite Metainformationen dazu zu benutzen, globale Zustände im Gesamtsystem zu verteilen. Typische Anwendungsbeispiele für solche Metainformationen sind URL-Referenzen auf systemweit zugängliche gemeinsame Ressourcen, z.B. zur Verteilung neu ins System eingespielter zentraler Konfigurationsdaten, bzw. Metainformationen, welche einer verteilten und/oder dezentralen und/oder asynchronen Zustandssynchronisation dienen, bzw. Metainformation, die dem impliziten Anstoßen verteilter Funktionen dienen. Für solche Metainformationen, welche sich nicht direkt auf die eigentlichen Nutzdaten einer Nachricht beziehen, müssen zusätzliche Abonnements eingerichtet, verwaltet und bedient werden. Dies führt zu einem zusätzlichen Kommunikationsaufwand im Gesamtsystem, einerseits zur Einrichtung der Abonnements und andererseits zur Übertragung der Metainformationen; insbesondere dann, wenn Metainformationen in hoher Frequenz übertragen werden. Dies kann die Gesamtleistung des Kommunikationssystems hinsichtlich Latenzzeiten und Netzwerkauslastung signifikant negativ beeinflussen.

Die Aufgabe der Erfindung besteht darin, eine/ein gegenüber des eingangs genannten Standes der Technik verbessertes Verfahren bzw. System/Vorrichtung anzugeben.

Diese Aufgabe wird durch die unabhängigen Ansprüche gelöst. Vorteilhafte Weiterbildungen sind Gegenstand der abhängigen Ansprüche.

Die Erfindung beansprucht ein Computer-implementiertes Verfahren zur Übertragung von Daten innerhalb eines Publish-Subscribe basierten Kommunikationsnetzes von mindestens einer Datenbereitstellungskomponente (z.B. 1. Agent) zu mindestens einer Datenkonsumkomponente (z.B. 2. Agent) des Kommunikationsnetzwerkes, wobei die genannten Datenkomponenten zumindest einen Teil eines mehrere Datenkomponenten umfassenden System bilden, wobei die Daten mindestens eine Nutzinformation einer bestehenden ein Abonnement begründenden Kommunikation zwischen den genannten Datenkomponenten und gegebenenfalls mindestens eine auf die Nutzinformation bezogene Metainformation umfassen, dadurch gekennzeichnet, dass in die Daten gegebenenfalls zusätzlich mindestens eine von der Nutzinformation unabhängige systemweite Metainformation eingebettet ist oder wird.

Die Datenbereitstellungskomponente kann auch die Rolle einer Datenkonsumkomponente und die Datenkonsumkomponente kann auch die Rolle der Datenbereitstellungskomponente einnehmen. Jede Datenkonsumkomponente kann mehrere gleich(artig)e solche systemweiten Informationen von mehreren Datenbereitstellungskomponenten empfangen. Sie kann beim Empfang einer solchen systemweite Information prüfen, ob diese bereits verarbeitet worden ist.

Unter einer ein Abonnement begründenden Kommunikation wird eine Kommunikation verstanden, mittels welcher das Abonnement zwischen Datenbereitstellungskomponente und Datenkonsumkomponente vereinbart wird.

Bei dem oben genannten Verfahren bettet die mindestens eine Datenkonsumkomponente die systemweite, nicht auf die Nutzinformation bezogenen Metainformation in eine schon bestehende ein Abonnement begründende Kommunikation zwischen Datenbereitstellungskomponente und Datenkonsumkomponente ein. Auf diese Weise kann die für eine Begründung eines Abonnements ohnehin zu unternehmende Kommunikation zugleich zur Übertragung dieser Metainformation genutzt werden. Zweckmäßig wird diese Kommunikation um die mindestens eine systemweite Metainformation ergänzt. Demgemäß können diese mindestens eine Metainformation ohne zusätzliche Kommunikationsvorgänge bzw. Nachrichtenkanäle bzw. zusätzlich einzurichtender Abonnements erfolgen.

Auch ist keine Modifikation beim Format bzw. der Struktur der zu übertragenden Daten bzw. Nutzinformation notwendig, da alle geläufigen, insbesondere die eingangs genannten Publish/Subscribe-Verfahren die Übertragung von Metainformationen im Header zusätzlich zur eigentlichen Nutzinformation, z.B. via "User Properties" in MQTT v5 und "RTPS Metadata" in DDS, unterstützen.

Die mindestens eine genannte systemweite Metainformation kann für eine Einführung und/oder eine Aktualisierung einer Firmware und/oder Software und/oder für eine Konfiguration einer eingeführten Funktion der genannten Datenkomponenten herangezogen werden.

Die mindestens eine genannte systemweite Metainformation kann für eine Einführung und/oder eine Aktualisierung einer Firmware und/oder Software und/oder für eine Konfiguration einer eingeführten Funktion von Netzwerkkomponenten herangezogen werden, über die die Kommunikation zwischen den Datenkomponenten geleitet wird und/oder durch welche die Kommunikation zwischen den Datenkomponenten gesteuert wird. So eine Netzwerkkomponente kann z.B. ein Router, Brigde, Gateway etc. sein.

Die Funktion kann eine Funktion in einem Arbeits- und/oder Fertigungsverfahren sein, insbesondere zumindest ein Verfahrensschritt des Arbeits- und/oder Fertigungsverfahrens und/oder eine Information, vorzugsweise eine Sensor-Information zur Durchführung zumindest eines Verfahrensschritts des Arbeits- und/oder Fertigungsverfahrens und/oder eine Steuerfunktion zumindest eines Verfahrensschritts des Arbeits- und/oder Fertigungsverfahrens.

Eine weitere Ausprägung der systemweiten Metainformation kann sein, dass sie zumindest eine Identifikationsinformation umfasst, welche die Daten bereitstellende Datenbereitstellungskomponente der bestehenden ein Abonnement begründenden Kommunikation identifiziert. Die Identifikationsinformation kann auch der Sicherheit des Gesamtsystems dienen. Sie kann eine herkunftsidentifizierende, datenquelle-identifizierende bzw. senderbezogene Information sein wie z.B. Signatur- oder Wasserzeichendaten, welche eine kontinuierliche, beiläufige Validierung der Daten oder des Ursprungs der Daten beim Empfänger ermöglicht bzw. ermöglichen. Sie kann quasi als eine Art Beweis verstanden werden, dass der Sender, hier die Datenbereitstellungskomponente, die Geheimnisse, d.h. ein systemweites Geheimnis und davon abgeleitete Nachrichten- und/oder Empfänger-spezifische Identifikationsinformationen kennt.

Die zumindest Identifikationsinformation kann ein Geheimnis, insbesondere ein (zuvor generiertes) Einmalpasswort, repräsentieren.

Beansprucht wird ferner ein System zur Übertragung von Daten innerhalb eines Publish-Subscribe basierten Kommunikationsnetzes von mindestens einer Datenbereitstellungskomponente zu mindestens einer Datenkonsumkomponente des Kommunikationsnetzwerkes, wobei das System die genannten Datenkomponenten umfasst, wobei das System dazu ausgelegt ist, dass die Daten mindestens eine Nutzinformation einer bestehenden ein Abonnement begründenden Kommunikation zwischen den genannten Datenkomponenten und gegebenenfalls mindestens eine auf die Nutzinformation bezogene Metainformation zu umfassen, dadurch gekennzeichnet, dass in die Daten mindestens eine von der Nutzinformation unabhängige systemweite Metainformation eingebettet ist oder wird.

Das System kann mit Hilfe zumindest eines im System angeordneten oder an das System angeschlossenen Prozessor die oben erwähnten Verfahrensschritte ausführen.

Die oben genannten Verfahrensschritte können computerimplementiert sein. Die Module bzw. Einheiten bzw. die Vorrichtung, die dazu eingerichtet sind, solche Verfahrensschritte auszuführen, können hardware-, firmware- und/oder softwaremäßig implementiert sein und jeweils für sich einen Prozessor aufweisen oder mit einem übergeordneten Prozessor kommunizieren.

Ein weiterer Aspekt der Erfindung ist ein Computerprogramm(- produkt) mit Programmcodemitteln zur Durchführung des Verfahrens nach einem der oben erwähnten Ausführungsformen, wenn es in einem System der oben genannten Art bzw. verteilt abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung oder in deren Mitteln integriert sein.

Das oben genannte System bzw. Vorrichtung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

Figur zeigt beispielhaft ein System, insbesondere ein Multiagentensystem, bei dem das erfindungsgemäße Verfahren angewendet werden kann.

Über ein Kommunikationsnetzwerk CN, das als lose gekoppeltes Kommunikationssystem mit einem Publikations- /Abonnementdienst, abgekürzt PUBSUB, realisiert ist, sind zwei oder mehrere Agenten AG1, AG2 im System verbunden. Jeder Agent kann Abonnements AB einrichten und/oder Nachrichten NAB auf (i.d.R. von anderen Agenten) eingerichtete Abonnements AB publizieren. In einer Nachricht NAB werden die Daten von einer Datenbereitstellungskomponente z.B. AG2 zu einer Datenkonsumkomponenten z.B. AG1 übertragen. In der Nachricht NAB wird zum einen die eigentliche Nutzinformation NI transportiert. Zum andere kann ein Agent aber auch davon unabhängige Metainformation MI, vor allem systemweite Metainformationen beifügen. Somit können systemweite Metainformationen auf den bestehenden Nutzinformation-spezifischen Abonnements übertragen werden.

Dazu werden diese Metainformationen in allen auf Nutzinformation-Abonnements publizierten Nachrichten fallweise, d.h. je nach Bedarf, beiläufig als Headerinformation mitübertragen.

Auf diese Weise können solche Metainformationen bei Bedarf im "Huckepack-Verfahren" auf den vorhandenen Nachrichtenkanälen im System verbreitet werden. Jede Datenkomponente kann als Systemteilnehmer, der Abonnements eingerichtet hat, über seine abonnierten Nachrichtenkanälen diese Metainformationen empfangen, verarbeiten und diese - eventuell modifiziert oder ergänzt um weitere Metainformationen - mit der Publikation eigener Nachrichten weiter verteilen. Da diese Metainformationen im Kommunikationsnetz "zirkulieren", können Systemteilnehmer dieselben Werte mehrfach empfangen. Deshalb prüft die Datenkonsumkomponente die empfangenen Daten mit ihren Werten z.B. Temperaturdaten eines Sensors beim Empfang darauf, ob sie schon verarbeitet wurden oder neu sind. Auf Basis dieser Prüfung der empfangenen Metainformationen können dann auch Aktionen u.a. auch eine Folgekommunikation ausgelöst werden, ohne dass hierfür ein expliziter Kommunikationskanal eingerichtet werden oder eine explizite Kommunikation stattfinden muss.

Ein Systemteilnehmer, der nur Nachrichten publiziert, aber keine Abonnements eingerichtet hat, wird über das beschriebene Verfahren keine Metainformationen erhalten. Dies ist aber keine Einschränkung, da solche Datenkomponenten, wie z.B. einfache IoT-Geräte, diese Metainformation auch gar nicht selbst interpretieren und verarbeiten können.

Format und Struktur von dieser Metainformationen sind anwendungsspezifisch festzulegen, beispielsweise in Form einer Menge von Attribut-Werte Paaren. Attribute dienen dabei als Schlüssel für spezifische Metainformationen, denen jeweils ein bestimmter Wert zugewiesen ist. Attribut-Werte Paare können dynamisch hinzugefügt und entfernt werden. Werte sollten kompakt gehalten werden, z.B. indem sie global eindeutige Bezeichner (UUIDs) oder Referenzen auf die eigentlichen Metainformationen enthalten.

Folgendes Beispiel beschreibt solche Metainformationen, die verteilt werden sollen, wenn eine neue Version zentraler Konfigurationsdaten ins System eingespielt wird. Empfänger dieser Metainformationen sind vor allem die Agenten als Datenkonsumkomponenten. Jedoch können reine Netzwerkkomponenten wie z.B. Router solche Metainformationen empfangen, wenn sie über eine Funktionalität zu Einrichten eines Abonnements als Empfänger verfügen. Neben einer neuen Version kann auch eine URL mitgegeben werden, die den Abruf der eigentlichen Konfigurationsdaten über eine REST (Representational State Transfer) Schnittstelle ermöglicht:

```
{
  "config.version": "4.2",
 } "config.url": "https://my-iot-app.siemens.com/config/v4.2"
```

Im obigen Beispiel können die Details der Metainformation (im Beispiel die eigentliche Konfiguration) über einen Seitenkanal (im Beispiel adressiert durch eine URL) durch das lokale System abgerufen werden. Aus Effizienzgründen ist das Nutzen von Seitenkanälen für Details der Metainformationen das bevorzugte Verfahren. Das beschriebene Verfahren der beiläufig übertragenen Metainformationen ist aber auch ohne Seitenkanäle nutzbar, so dass dann die vollständige Metainformation in der bestehenden ein Abonnement begründenden Kommunikation bzw. Kommunikationskanal übertragen wird.

Die oben genannten Konfigurationsdaten können auch eine Funktion eines Agenten betreffen, die in einem Arbeits- und/oder Fertigungsverfahren, insbesondere zumindest ein Verfahrensschritt des Arbeits- und/oder Fertigungsverfahrens benötigt wird. Sie können auch eine Information beinhalten, vorzugsweise eine Sensor-Information, zur Durchführung zumindest eines Verfahrensschritts des Arbeits- und/oder Fertigungsverfahrens, und/oder eine Steuerfunktion zumindest eines Verfahrensschritts des Arbeits- und/oder Fertigungsverfahrens.

Die Kodierung der Metainformationen zur Übertragung als Headerdaten einer Nachricht ist durch das verwendete Publish/Subscribe-Kommunikationsverfahren vorgegeben, beispielsweise als Binärkodierung oder als UTF-8 kodierten Zeichenkette.

Das zuvor beschriebene Verfahren lässt sich auch vorteilhaft dazu verwenden, um im Bereich der künstlichen Intelligenz lokale und globale Modellversionen, Aktualisierungen und ggf. deren Qualitätsmerkmale implizit zwischen autonomen Agenten dezentral zu synchronisieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System (Cloud) abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor bzw. eine Recheneinheit, der Teil eines Systems, eines Geräts, einer (Steuerungs)vorrichtung bzw. -anordnung bzw. -einheit und/oder eines Computers und/oder eines oder mehrerer Dienste in einer Rechnerwolke (Cloud) eines Diensterbringers sein kann, mindestens einen Verfahrensschritt des Verfahrens ausführt.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

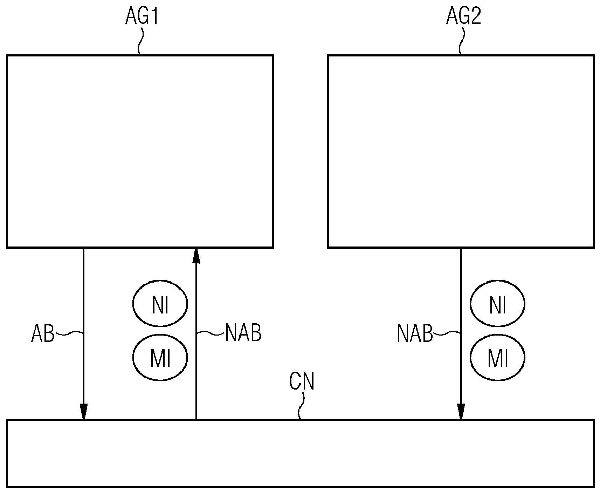

## Patentansprüche

1. Computer-implementiertes Verfahren zur Übertragung von Daten innerhalb eines Publish-Subscribe basierten Kommunikationsnetzes (CN) von mindestens einer Datenbereitstellungskomponente (AG2) zu mindestens einer Datenkonsumkomponente (AG1) des Kommunikationsnetzwerkes, wobei die genannten Datenkomponenten zumindest einen Teil eines mehrere Datenkomponenten umfassenden System bilden, wobei die Daten mindestens eine Nutzinformation (NI) einer bestehenden ein Abonnement begründenden Kommunikation zwischen den genannten Datenkomponenten und gegebenenfalls mindestens eine auf die Nutzinformation bezogene Metainformation umfassen, **dadurch gekennzeichnet, dass** in die Daten mindestens eine von der Nutzinformation unabhängige systemweite Metainformation (MI) eingebettet ist oder wird.

2. Verfahren nach dem vorhergehenden Anspruch, **dadurch gekennzeichnet, dass** die mindestens eine genannte systemweite Metainformation für eine Einführung und/oder eine Aktualisierung einer Firmware und/oder Software und/oder für eine Konfiguration einer eingeführten Funktion der genannten Datenkomponenten herangezogen wird.

3. Verfahren nach einem der vorhergehenden Ansprüche, **dadurch gekennzeichnet, dass** die mindestens eine genannte systemweite Information für eine Einführung und/oder eine Aktualisierung einer Firmware und/oder Software und/oder für eine Konfiguration einer eingeführten Funktion von Netzwerckomponenten herangezogen wird, über die die Kommunikation zwischen den Datenkomponenten geleitet wird und/oder durch welche die Kommunikation zwischen den Datenkomponenten gesteuert wird.

4. Verfahren nach einem der vorhergehenden Ansprüche 2 oder 3, **dadurch gekennzeichnet, dass** die Funktion eine Funktion in einem Arbeits- und/oder Fertigungsverfahren ist, insbesondere zumindest ein Verfahrensschritt des Arbeits- und/oder Fertigungsverfahrens und/oder eine Information, vorzugsweise eine Sensor-Information zur Durchführung zumindest eines Verfahrensschritts des Arbeits- und/oder Fertigungsverfahrens und/oder eine Steuerfunktion zumindest eines Verfahrensschritts des Arbeits- und/oder Fertigungsverfahrens.

5. Verfahren nach einem der vorhergehenden Ansprüche, **dadurch gekennzeichnet, dass** jede Datenkonsumkomponente mehrere gleich(artig)e solche systemweiten Informationen von mehreren Datenbereitstellungskomponenten empfangen kann und beim Empfang einer solchen systemweite Information prüft, ob diese bereits verarbeitet worden ist.

6. Verfahren nach einem der vorhergehenden Ansprüche, **dadurch gekennzeichnet, dass** die mindestens eine genannte systemweite Metainformation zumindest eine Identifikationsinformation umfasst, welche die Daten bereitstellende Datenbereitstellungskomponente der bestehenden ein Abonnement begründenden Kommunikation identifiziert.

7. Verfahren nach dem vorhergehenden Anspruch, **dadurch gekennzeichnet, dass** die zumindest Identifikationsinformation ein Geheimnis, insbesondere ein Einmalpasswort, repräsentiert.

8. System zur Übertragung von Daten innerhalb eines Publish-Subscribe basierten Kommunikationsnetzes (CN) von mindestens einer Datenbereitstellungskomponente (AG2) zu mindestens einer Datenkonsumkomponente (AG1) des Kommunikationsnetzwerkes, wobei das System die genannten Datenkomponenten umfasst, wobei das System dazu ausgelegt ist, dass die Daten mindestens eine Nutzinformation (NI) einer bestehenden ein Abonnement begründenden Kommunikation zwischen den genannten Datenkomponenten und gegebenenfalls mindestens eine auf die Nutzinformation bezogene Metainformation zu umfassen, **dadurch gekennzeichnet, dass** in die Daten mindestens eine von der Nutzinformation unabhängige systemweite Metainformation (MI) eingebettet ist oder wird.

9. Computerprogrammprodukt umfassend einen durch einen Prozessor ausführbaren Programmkode oder mehrere durch mehrere Prozessoren ausführbare und zusammenwirkende Programmkodemodule, welches oder welche Befehle aufweisen, die die Ausführung des Verfahrens nach einem der vorhergehenden Verfahrensansprüche auf dem System nach Anspruch 8 veranlassen.

10. Computerlesbarer Datenträger oder Datenträgersignal umfassend das Computerprogrammprodukt nach dem vorhergehenden Anspruch.
